# EUROPÄISCHE PATENTSCHRIFT

(11) **EP 1 193 479 B1**
(45) Veröffentlichungstag und Bekanntmachung des Hinweises auf die Patenterteilung: **26.10.2005**
(21) Anmeldenummer: 01122679.2
(22) Anmeldetag: 28.09.2001
(51) Int. Cl.: G01G 3/02

(54) **Federwaage**
Spring scale
BALANCE A RESSORT

(30) Priorität: 29.09.2000 CH 19122000
(43) Veröffentlichungstag der Anmeldung: 03.04.2002
(73) Patentinhaber: Pesola Präzisionswaagen AG, 6340 Baar (CH)
(72) Erfinder: Strohmeier, Rolf Martin, 6340 Baar (CH)
(74) Vertreter: Zink-Wild, Markus Peter

(56) Entgegenhaltungen:
- DE-C- 365 837
- GB-A- 643 830
- GB-A- 2 205 169
- US-A- 4 964 479

## Beschreibung

Die vorliegende Erfindung betrifft eine Federwaage.

### Beschreibung des Standes der Technik

Bei herkömmlichen Federwaagen mit 2-Rohr Technik weist das nicht transparente Aussenrohr einen Skalenschlitz auf. Ein Innenrohr ist in das Aussenrohr eingeschoben und weist einen vorstehenden Nocken mit Markierfunktion auf, welcher sich im Skalenschlitz auf und ab bewegt. Dieser Nocken kann an der Skalenschlitzkante reiben und somit das Messergebnis verfälschen. Dieser Nocken verhindert die freie Drehbarkeit des Innenrohres.

Durch den Skalenschlitz können zudem Verunreinigungen in das Innere der Federwaage gelangen und die Funktion beeinträchtigen.

Die Messskala kann nur im Bereich des Skalenschlitzes abgelesen werden.

Aus Gründen der Messgenauigkeit und der Stabilität müssen solche Federwaagen praktisch zwingend ein Aussenrohr aus Metall, insbesondere aus Aluminium, aufweisen. Die Fertigung, das Anbringen von einem oder zwei Gewinden, das Bedrucken und Färben sowie das Anbringen des Skalenschlitzes am Aussenrohr sind Faktoren, welche das Endprodukt wesentlich verteuern.

Eine Federwaage dieser Art ist in US-A-4 964 479 beschrieben. Bei dieser Federwaage kann der Nullpunkt justiert werden.

In DE-C-365 837 wird eine Federwaage mit zwei hintereinander geschalteten Einzelnfedern beschrieben. Dabei sind die beiden Einzelfedern derart aufgehängt, dass der stärkere Federteil durch den schwächeren Federteil getragen wird.

Die an der Federwaage vorhandene Klammer oder der Haken zur Aufnahme / Halterung des Wägegutes müssen frei drehbar gelagert sein, damit bei einer allfälligen Drehung des Wägegutes keine Torsion auf den Nocken im Skalenschlitz des Aussenrohres ausgeübt wird. Eine solche Lagerung verteuert die Federwaage.

Bei herkömmlichen Federwaagen mit 2-Rohr Technik ist die im Oberbegriff des unabhängigen Anspruches erwähnte Stellschraube in eine Federhalterung eingeschraubt. Der Stellweg der Federhalterung auf der Stellschraube kann einseitig nicht begrenzt werden, wodurch es möglich ist, dass die Stellschraube aus der Federhalterung vollständig herausgeschraubt werden kann und somit die Federwaage ihre Funktionsfähigkeit verliert.

### Ziele der Erfindung

Es ist ein Ziel der vorliegenden Erfindung, eine Federwaage zur Verfügung zu stellen, welche im Aussenrohr keinen Skalenschlitz und am Innenrohr keinen entsprechenden Nocken mit Markierfunktion aufweist.

Es ist ein weiteres Ziel der vorliegenden Erfindung, eine Federwaage zur Verfügung zu stellen, bei welcher eine Federfassung und alle mit ihr nicht drehbar verbundenen Elemente, mit oder ohne angehängtes Wägegut, ohne Behinderung der Nullpunkt-Justierung und der Tara-Funktion, frei drehbar ist.

Es ist ein weiteres Ziel der vorliegenden Erfindung, eine Federwaage zur Verfügung zu stellen, bei welcher der Stellweg eines Fassungshalters auf der Stellschraube beidseitig begrenzt ist.

Dieser Fassungshalter soll ein Innengewinde aufweisen und durch das Vorhandensein eines Sporns nicht drehbar, achsial geführt werden.

Diese Federwaage soll ein geschlossenes Aussenrohr aufweisen, welches die innere Technik vor Verschmutzung schützt.

Es ist ein weiteres Ziel der vorliegenden Erfindung, eine Federwaage zur Verfügung zu stellen, deren Einzelteile günstig herzustellen und einfach zu montieren sind.

Es ist ein weiteres Ziel der vorliegenden Erfindung, eine Federwaage zur Verfügung zu stellen, welche genau zu justieren sowie einfach und sicher zu bedienen ist.

Es ist ein weiteres Ziel der vorliegenden Erfindung, eine Federwaage zur Verfügung zu stellen, welche gegen ungewollte Zerlegung in ihre Einzelteile konstruktiv gesichert ist.

Der Deckel und das Aussenrohr dieser Federwaage sollen insbesondere mittels Verklebung oder Verschweissung derart miteinander verbunden sein, dass eine zerstörungsfreie Zerlegung nicht möglich ist.

Der Einbauraum für die Spiralfeder soll so bemessen sein, dass eine Spiralfeder mit günstigem Wicklungsverhältnis verwendet werden kann.

Gemäss einer bevorzugten Ausführungsform soll entweder das Aussenrohr oder das Innenrohr aufgedruckte oder aufgeklebte Skalen und Beschriftungen tragen.

Das Aussenrohr soll insbesondere aus einem Material mit geringer Dichte gefertigt und in seiner Gesamtheit einfach, schnell und kostengünstig herstellbar sein.

Die Stellschraube soll insbesondere mit einer feinen Rasterung drehbar und somit präzis justierbar sein und gegen ungewollte Verdrehung geschützt sein.

### Zusammenfassung der Erfindung

Mit der vorliegenden Erfindung werden die obigen Ziele erreicht.

Die vorliegende Erfindung ist im unabhängigen Anspruch definiert.

### Beschreibung der Figuren

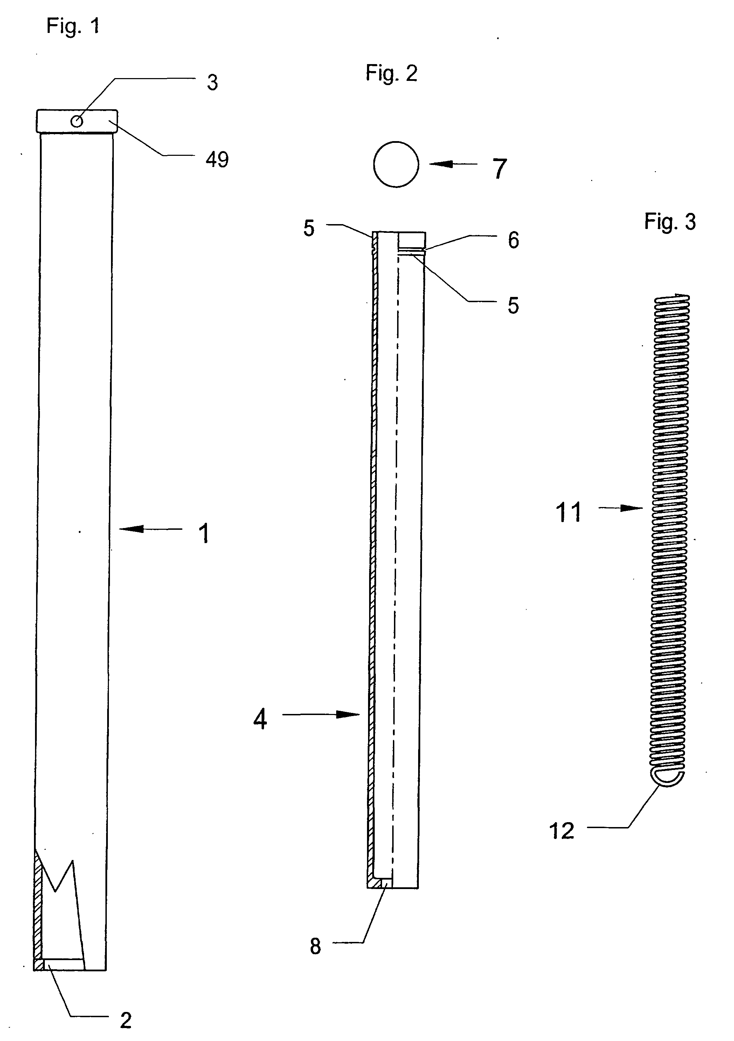

Figur 1 zeigt eine Seitenansicht eines Aussenrohres 1, wobei ein Teil davon in aufgeschnittener Form dargestellt ist.

Figur 2 zeigt eine Seitenansicht eines Innenrohres 4, wobei ein Teil davon in aufgeschnittener Form dargestellt ist.

Figur 3 zeigt eine Seitenansicht einer Spiralfeder 11.

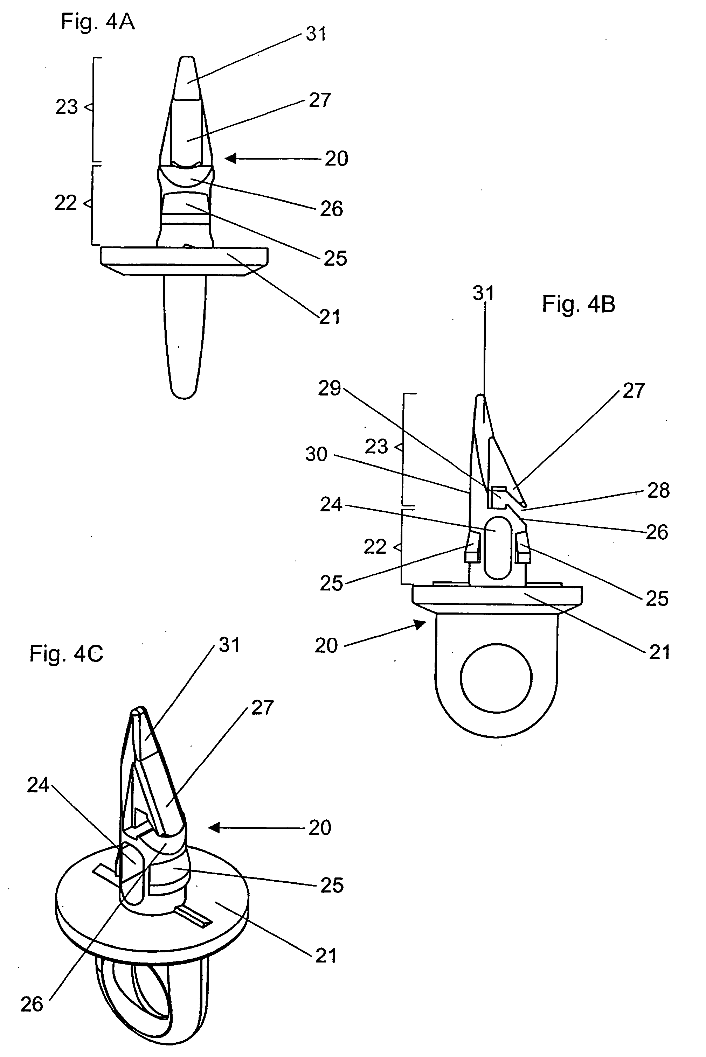

Figuren 4A und 4B zeigen Seitenansichten einer Abschlussöse 20.

Figur 4C zeigt eine isometrische Ansicht einer Abschlussöse 20.

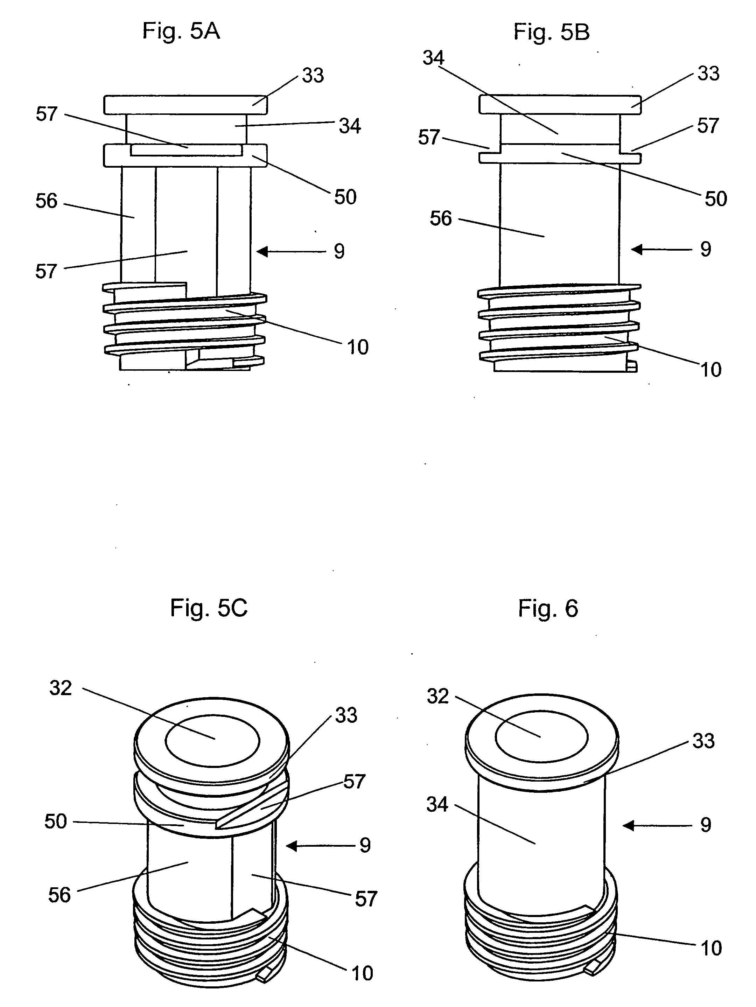

Figuren 5A und 5B zeigen Seitenansichten einer Federfassung 9.

Figur 5C zeigt eine isometrische Ansicht einer Federfassung 9.

Figur 6 zeigt eine isometrische Ansicht einer anderen Ausführungsform einer Federfassung 9.

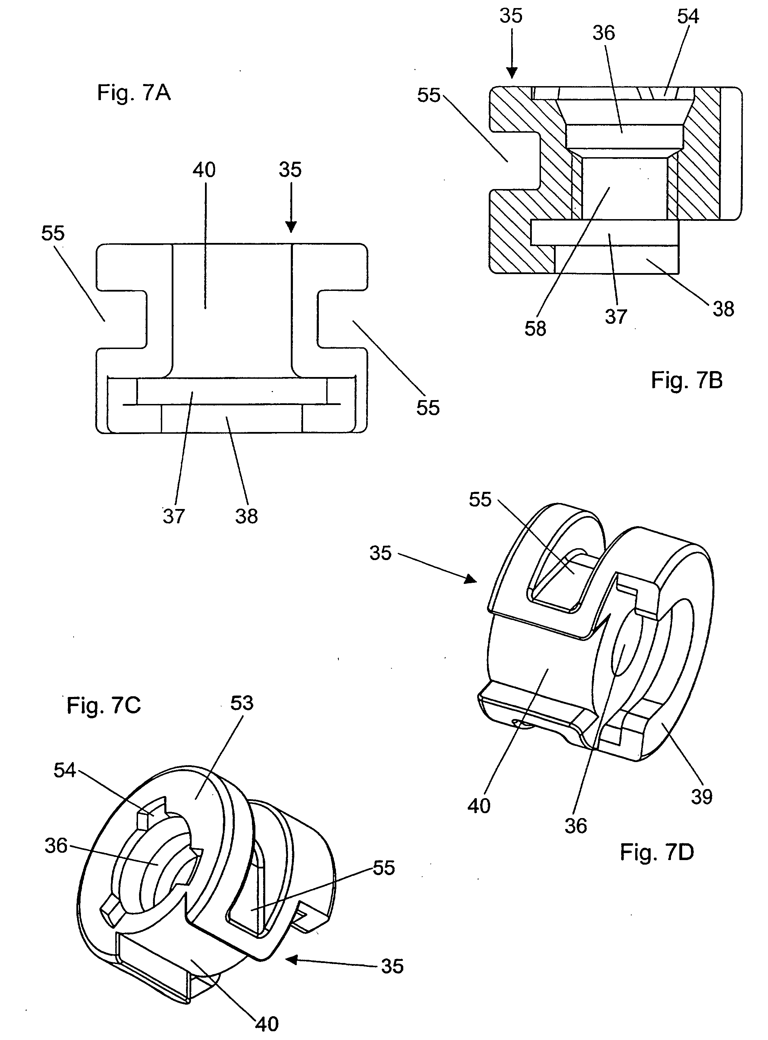

Figur 7A zeigt eine Seitenansicht eines Fassungshalters 35.

Figur 7B zeigt einen Schnitt durch einen Fassungshalter 35.

Figuren 7C und 7D zeigen isometrische Ansichten eines Fassungshalters 35.

Figur 8 zeigt eine Seitenansicht einer Stellschraube 13.

Figur 9A zeigt eine Seitenansicht eines Deckels 41 mit Sporn 42.

Figur 9B zeigt eine Draufsicht eines Deckels 41 mit Sporn 42.

Figur 10 zeigt eine Ansicht eines Aufhängebügels 19.

Figur 11 zeigt schematisch alle Einzelteile im gleichen Massstab und deren Montagereihenfolge mit den Schritten A bis K, welche mit Pfeilen dargestellt sind.

### Bevorzugte Ausführungsformen der Erfindung

Bevorzugte Ausführungsformen sind in den abhängigen Ansprüchen gekennzeichnet.

Im folgenden Teil werden mögliche Ausführungsformen von Einzelteilen der erfindungsgemässen Vorrichtung beschrieben. Dabei wird Bezug auf die Figuren genommen.

Die Stellschraube 13 umfasst ein Gewinde 14, einen Schraubenkopf 15 und ein dazwischen liegendes zylindrisches Teil 16.

Der Schraubenkopf 15 ist griffgünstig, beispielsweise rauh oder randriert, geformt. Er kann die Form einer Kugel, eines Kegels oder eines Zylinders haben.

Der Schraubenkopf 15 kann auf der dem Gewinde 14 gegenüberliegenden Seite ein achsiales und zentrisches Sackloch aufweisen.

Das zylindrische Teil 16 weist eine schlitzförmige Aussparung 17 auf, welche den verbleibenden Wandungen Federeigenschaften verleiht.

Es ist möglich, dass die schlitzförmige Aussparung 17 auch in einen Teil des angrenzenden Gewindes 14 hineinragt.

Das zylindrische Teil 16 weist an seiner dem Gewinde 14 zugewandten Seite wenigstens zwei sich gegenüberliegenden Nocken 18 auf.

An der Aussenseite der verbleibenden Wandung können sich gegenüberliegende, vorstehende Oliven 52 befinden.

Der Aussendurchmesser des Schraubenkopfes 15 beim Uebergang zum zylindrischen Teil 16 ist grösser als der Aussendurchmesser des zylindrischen Teils 16.

Der Aussendurchmesser des zylindrischen Teils 16 beim Uebergang zum Gewinde 14 ist grösser oder gleich dem Aussendurchmesser des Gewindes 14.

Beim Deckel 41 mit Sporn 42 weist der Deckel 41 eine Abschlusskappe 43 mit vorstehendem, umlaufendem Rand 44 und ein zylinderförmiges Unterteil 45 auf.

Das zylinderförmige Unterteil 45 weist einspringende Hohlräume 46, beispielsweise eine umlaufende Nut, und Mittel 47 zur Verdrehsicherung auf, beispielsweise wenigstens einen über das zylinderförmige Unterteil 45 hinausragenden Steg 47.

Dieser vorstehende Steg 47 greift in eine der vorhandenen entsprechend geformten Vertiefungen an der Innenwand eines Aussenrohres 1 ein.

Das Unterteil 45 ist vorzugsweise an seinem der Abschlusskappe 43 gegenüberliegenden Ende mit einer umlaufenden Anschrägung versehen, welche das Einführen des Deckels 41 mit Sporn 42 in das Aussenrohr 1 erleichtert.

Der Deckel 41 weist ein durchgehendes, achsiales und zentrisches Loch 48 auf. Dieses Loch 48 kann zylindrisch oder mehreckig sein, beispielsweise zehneckig.

Vorstehende Oliven 52 an der Stellschraube 13 können in zwei gegenüberliegende Ecken dieses zehneckigen Loches 48 im Deckel 41 eingreifen und somit bei der Drehung der Stellschraube 13 ein stufenweises Einrasten bewirken.

Der Deckel 41 umfasst auch einen Sporn 42, welcher vorzugsweise angeformt ist. Dieser Sporn 42 ist stabförmig und parallel zur Mittelachse des Deckels 41 ausgebildet und kann der Form der Innenwand eines Aussenrohres 1 angepasst sein.

Die der Längsachse des Aussenrohres 1 zugewandte Seite des Sporns 42 kann konzentrisch zur Wandung des Aussenrohres 1 geformt sein.

Die Breite und die Wandstärke des Sporns 42 sind zweckmässig derart dimensioniert, dass bei Torsion- und/oder Zugbelastung weder eine bleibende Deformation noch ein Bruch erfolgen.

Das der Abschlusskappe 43 gegenüberliegende Ende des Sporns 42 kann eine Verdickung 51 aufweisen, welche die Funktion eines Anschlages für einen Fassungshalter 35 hat.

Es ist auch möglich, dass der Sporn 42 als Einzelteil ausgebildet ist.

In diesem Falle muss er an wenigstens einem Ende eine solche Verdickung 51 aufweisen, welche in eine entsprechend geformte Aussparung im Unterteil 45 des Deckels 41 derart eingreift, dass bei einer Zugbelastung parallel zur Längsachse des Aussenrohres 1 keine Trennung von Deckel 41 und Sporn 42 auftritt.

Der Fassungshalter 35 hat eine zylindrische Grundform mit einem durchgehenden achsialen und zentrischen Loch 36, welches entlang der Mittelachse des Fassungshalters 35 verschiedene Durchmesser aufweist.

Wenn der Fassungshalter 35 im Spritzgussverfahren hergestellt wird, kann sich - bedingt durch das Herstellungsverfahren - in der Stirnseite 53 oder in der Abschlussfläche 39, welche beide rechtwinklig zur Mittelachse des Fassungshalters 35 stehen, wenigstens eine Kerbe 54, insbesondere drei Kerben 54, befinden.

Der Teil des genannten durchgehenden achsialen und zentrischen Loches 36, welcher sich bei den genannten Kerben 54 befindet, ist vorzugsweise als Konus ausgebildet.

Die engste Stelle dieses Konus geht in ein Innengewinde 58 über, welches sich über einen Teil des genannten Loches 36 erstreckt.

Das Innengewinde 58 wird durch einen U-förmigen Schlitz 37 begrenzt, welcher rechtwinklig zur Mittelachse des Fassungshalters 35 steht.

Das Zentrum des Halbkreises des U-förmigen Schlitzes 37 liegt auf der Mittelachse des Fassungshalters 35.

Dieser U-förmige Schlitz 37 wird durch eine U-förmige, kleinere Aussparung 38 begrenzt.

Das Zentrum des Halbkreises der U-förmigen Aussparung 38 liegt ebenfalls auf der Mittelachse des Fassungshalters 35.

Die beiden Schenkel des U-förmigen Schlitzes 37 und die beiden Schenkel der U-förmigen Aussparung 38 sind alle parallel. Die U-Form des Schlitzes 37 und die U-Form der Aussparung 38 öffnen auf die gleiche Seite.

Dabei ist der Radius des U-förmigen Schlitzes 37 grösser als der Radius der U-förmigen Aussparung 38.

Die eine Seite dieser U-förmigen Aussparung 38 bildet die zur Mittelachse des Fassungshalters 35 senkrecht stehende Abschlussfläche 39.

Der in der zylindrischen Aussenwand des Fassungshalters 35 normalerweise spitz zulaufende U-förmige Schlitz 37 und die in der zylindrischen Aussenwand des Fassungshalters 35 normalerweise spitz zulaufende U-förmige Aussparung 38 können je gekürzt und einlenkend gerundet sein.

Ueber die zylindrische Aussenwand des Fassungshalters 35 und parallel zu seiner Mittelachse zieht sich ein durchgehender Kanal 40.

Dieser Kanal 40 hat vorzugsweise zwei gegenüberliegende parallele, seitliche Begrenzungsflächen.

Dieser Kanal 40 kann auch radial geschnittene seitliche Begrenzungsflächen aufweisen.

Die nicht seitliche Begrenzungsfläche dieses Kanals 40 weist vorzugsweise eine zur zylindrischen Grundform des Fassungshalters 35 konzentrische Form auf.

Dieser Kanal 40 befindet sich vorzugsweise mittig der Oeffnung des U-förmigen Schlitzes 37.

An der zylindrischen Aussenwand des Fassungshalters 35 kann eine umlaufende Nut 55 eingelassen sein.

Alternativ kann gemäss einer zweiten Variante das Innengewinde 58 im Fassungshalter 35 durch eine eingelegte mehrkantige, beispielsweise sechskantige, Normmutter realisiert werden.

In diesem Falle muss diese Normmutter gegen Verdrehung und Ausreissen konstruktiv im Fassungshalter 35 gesichert sein.

Das Aussenrohr 1 ist auf seiner Aussenseite vorzugsweise zylindrisch ausgeformt und kann an einem Ende einen vorstehenden, umlaufenden Kragen 49 mit Verstärkungsfunktion aufweisen.

Das Aussenrohr 1 ist auf seiner Innenseite, bedingt durch die bevorzugte Herstellung im Spritzgussverfahren, leicht kegelförmig.

Der Innendurchmesser des Aussenrohres 1 auf der Seite des Kragens 49 ist grösser als derjenige auf der gegenüberliegenden Seite.

Auf dieser gegenüberliegenden Seite befindet sich auf der Innenseite eine zusätzliche umlaufende Verengung 2, welche zusammen mit der Verdickung 5 am entsprechenden Innenrohr 4 die Funktion einer Ueberlastsicherung übernimmt.

Der Kragen 49 weist zwei sich gegenüberliegende Löcher 3 zur Aufnahme eines Aufhängebügels 19 auf.

Der Kragen 49 kann auf seiner Aussenseite wenigstens eine Positionierungskerbe aufweisen.

Die Innenwand des Kragens 49 weist Mittel zur Verdrehsicherung auf, beispielsweise eine Vertiefung zur Aufnahme eines vorstehenden Steges 47 am Deckel 41.

Das Aussenrohr 1 ist vorzugsweise aus transparentem, thermoplastischem Material gefertigt, beispielsweise Polycarbonat (PC), und kann aufgedruckte oder aufgeklebte Skalen und Beschriftungen tragen.

Das Innenrohr 4 ist auf seiner Innenseite, bedingt durch die bevorzugte Herstellung im Spritzgussverfahren, leicht kegelförmig.

Das Innenrohr 4 ist auf seiner Aussenseite zylindrisch und ist am Ende mit dem grösseren Innendurchmesser mit einer umlaufenden, zylindrischen, konzentrischen Verdickung 5 versehen, welche zusammen mit der Verengung 2 am Aussenrohr 1 die Funktion einer Ueberlastsicherung übernimmt.

In diese Verdickung 5 ist eine umlaufende Nut 6 eingelassen, welche der Aufnahme eines O-Ringes 7 mit Markierfunktion dient.

Das Innenrohr 4 weist am Ende mit dem kleineren Innendurchmesser einen Boden auf, welcher ein zentrisches Loch 8 hat.

Das Innenrohr 4 ist vorzugsweise aus einem thermoplastischen Material gefertigt, beispielsweise Polyoxymethylen (POM).

Wenn das Aussenrohr 1 aus nicht transparentem Material gefertigt ist, kann das Innenrohr 4 aufgedruckte oder aufgeklebte Skalen und Beschriftungen tragen.

In diesem Falle ist die Ablesestelle die Unterkante des Aussenrohres 1.

Als Feder wird eine zylindrische Spiralfeder 11 mit einseitig angeformter halbrunder Oese 12 verwendet.

Die Spiralfeder 11 ist vorzugsweise aus Runddraht hergestellt und ausgelegt für Drahtstärken von 0,2 mm bis 1,0 mm, was Wägekapazitäten von 10 g bis 3000 g entspricht.

Die Spiralfedern 11 weisen im eingebautem, vertikalem Zustand ohne angehängtes Wägegut vorzugsweise Längen von 100 mm bis 150 mm, insbesondere 110 mm bis 130 mm, auf.

Die Federfassung 9 hat eine zylindrische Grundform und hat in ihrem Innern eine zylindrische, achsiale Bohrung 32.

Die Federfassung 9 weist an einem Ende einen umlaufenden ersten Flansch 33 auf.

An diesen ersten Flansch 33 schliesst sich ein erstes zylindrisches Zwischenstück 34 an.

An dieses erste zylindrische Zwischenstück 34 schliesst sich vorzugsweise ein zweiter Flansch 50 und danach ein zweites zylindrisches Zwischenstück 56 an.

Es ist bevorzugt, dass der zweite Flansch 50 und das zweite zylindrische Zwischenstück 56 je zwei parallele und zur Mittelachse der Federfassung 9 symmetrisch angeordnete Abflachungen 57 aufweisen, wobei sich die Abflachungen 57 am zweiten Flansch 50 nur über einen Teilbereich seiner Dicke erstrecken und an das erste zylindrische Zwischenstück 34 anschliessen.

Das erste zylindrische Zwischenstück 34 oder, falls vorhanden, das zweite zylindrische Zwischenstück 56, dient der Aufnahme von gegebenenfalls vorhandenen, nicht federnden, überzähligen Windungen der montierten und justierten Spiralfeder 11.

Die Federfassung 9 weist an ihrem anderen Ende ein Aussengewinde 10 auf.

Es ist bevorzugt, dass die Federfassung 9 an diesem Ende einen Einführzylinder aufweist, welcher sich vom Anfang des ersten Gewindeumganges des Aussengewindes 10 bis kurz vor dem Ende des ersten Gewindeumganges entlang der Steigung des ersten Gewindeumganges erstreckt, wobei der Aussendurchmesser dieses Einführzylinders kleiner ist als der Innendurchmesser der Spiralfeder 11.

Das Aussengewinde 10 an der Federfassung 9 weist an seinem Anfang vorzugsweise eine schräge Einführhilfe auf.

Das Aussengewinde 10 an der Federfassung 9 hat vorzugsweise von zwei bis acht, insbesondere drei bis vier, Gewindeumgänge und ist vorzugsweise leicht kegelförmig, wobei sich der kleinere Kegeldurchmesser am Ort der Einführhilfe befindet.

Das Aussengewinde 10 an der Federfassung 9 geht an seinem Ende entweder in das erste zylindrische Zwischenstück 34 oder, falls vorhanden, in das zweite zylindrische Zwischenstück 56 über.

Die Abschlussöse 20 weist eine zylindrische Scheibe 21 auf.

Die Mittelachse der Abschlussöse 20 geht durch das Zentrum der zylindrischen Scheibe 21 und steht rechtwinklig zu ihr.

Auf der einen Seite der zylindrischen Scheibe 21 befindet sich ein Element, das die Anbringung einer Aufhängevorrichtung, beispielsweise ein Haken, eine Klammer, ermöglicht.

Dieses Element hat vorzugsweise die Form einer U-förmigen Lasche mit einer Oeffnung.

Die zylindrische Scheibe 21 kann in Richtung U-förmige Lasche gefast sein.

Auf der anderen Seite der zylindrischen Scheibe 21 befindet sich ein zylindrischer und konzentrischer Zapfen 22, welcher in eine asymmetrische Hakenspitze 23 übergeht.

Dieser Zapfen 22 weist eine schlitzförmige Aussparung 24 mit beispielsweise gerundeten oder eckigen Enden auf.

An der Aussenseite des Zapfens 22 befinden sich wenigstens zwei sich gegenüberliegende Nocken 25, insbesondere zwei Nocken 25, wobei zwischen den Nocken 25 und der zylindrischen Scheibe 21 ein Abstand vorhanden ist.

Diese Nocken 25 sind zweckmässig keilförmig geformt.

Die verbleibenden Wandungen des Zapfens 22 mit den Nocken 25 weisen Federeigenschaften auf.

Der Zapfen 22 weist eine einseitig schräge Fläche 26 auf, welche zusammen mit der Nase 27 der asymmetrischen Hakenspitze 23 einen Einschnitt 28 bildet.

Dieser Einschnitt 28 geht in eine Aussparung 29 über.

Beim Uebergang des Einschnittes 28 in die Aussparung 29 kann sich im Anschluss an die schräge Fläche 26 ein Steg befinden.

Der Anfang des Einschnittes 28 ist näher an der zylindrischen Scheibe 21 als das Ende dieses Einschnittes 28.

Es ist bevorzugt, dass sich die Oeffnung, die schlitzförmige Aussparung 24 und die Aussparung 29 auf die gleiche Seite öffnen, und dass die Abschlussöse 20 eine Symmetrieebene aufweist.

Die Nase 27 der asymmetrischen Hakenspitze 23 kann zwei sich parallel gegenüberliegende, symmetrisch angeordnete Flächen aufweisen.

Die Nase 27 und die der Nase 27 gegenüberliegende Rückwand 30 der asymmetrischen Hakenspitze 23 verjüngen sich zu einem abgerundeten Dorn 31.

Der Endpunkt des Dorns 31 liegt zwischen der theoretischen Verlängerung dieser Rückwand 30 des Zapfens 22 und der Mittelachse der Abschlussöse 20.

Die Spitze des Dorns 31 und die Spitze der Nase 27 liegen auf der Symmetrieebene der Abschlussöse 20 und auf verschiedenen Seiten bezüglich der Mittelachse der Abschlussöse 20.

Es ist bevorzugt, dass die Dornflanke und der Nasenrücken in einem stumpfen Winkel zueinander stehen.

Die Abschlussöse 20 ist vorzugsweise aus einem thermoplastischen Material gefertigt, beispielsweise Polyoxymethylen (POM).

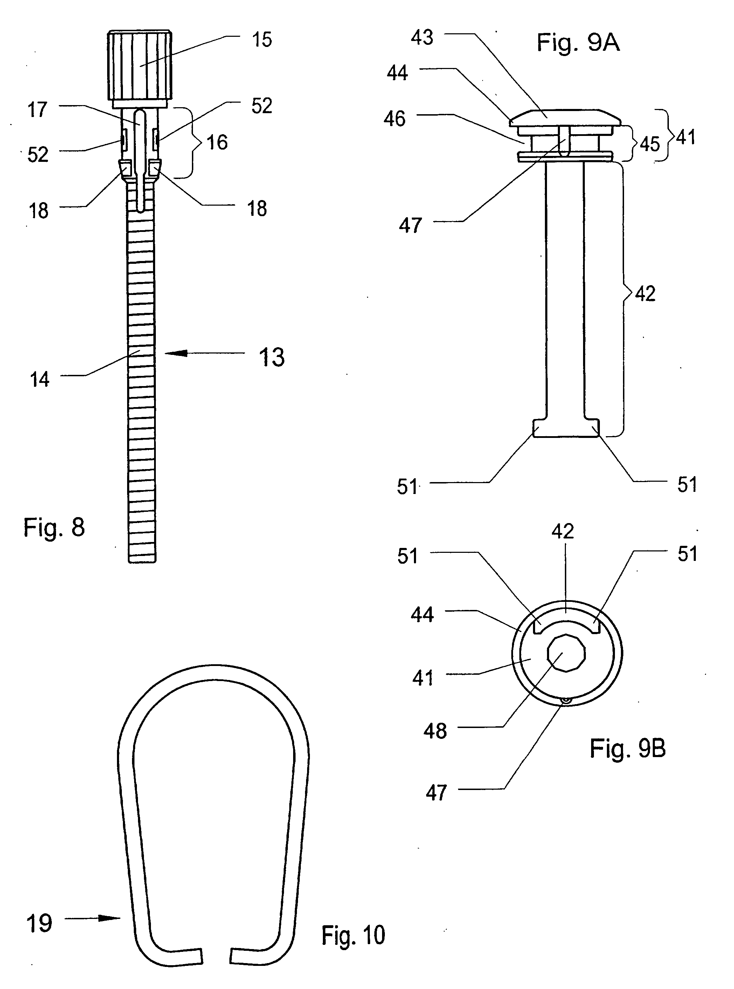

Der Aufhängebügel 19 hat vorzugsweise die in Figur 10 gezeigte Form und ist aus Metall gefertigt.

Das nachfolgende Beispiel dient der Illustration der Erfindung. Dabei wird auch die Montage der einzelnen Teile und die Justierung der Federwaage beschrieben.

### Beispiel

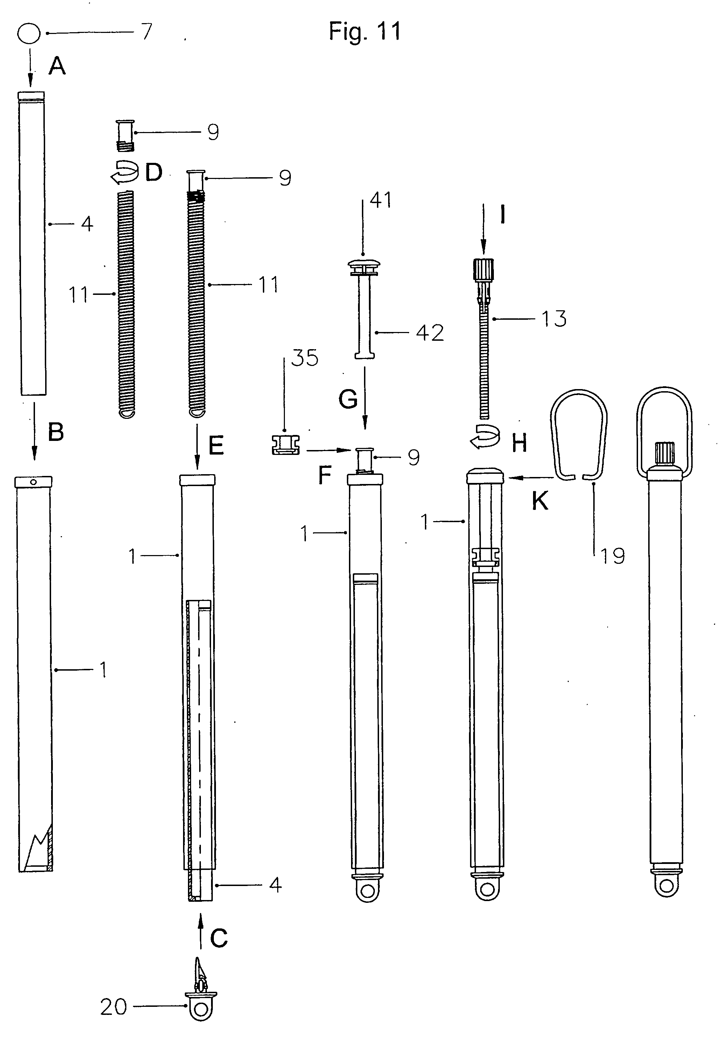

Das aus Polyoxymethylen (POM) im Spritzgussverfahren hergestellte Innenrohr 4 hat eine Gesamtlänge von 116,5 mm und einen Aussendurchmesser von 9,1 mm. Bei der umlaufenden zylindrischen, konzentrischen, 4 mm langen Verdickung 5 beträgt der Aussendurchmesser 9,5 mm. In diese Verdickung 5 ist eine 0,5 mm tiefe, umlaufende Nut 6 eingelassen, in die ein passender, roter O-Ring 7, gemäss Figur 11, Schritt A, eingelegt ist. Das der Verdickung 5 gegenüberliegende Ende des Innenrohres 4 weist einen Boden mit einem zentrischen Loch 8 mit einem Durchmesser von 4,1 mm auf.

Das aus Polycarbonat (PC) im Spritzgussverfahren hergestellte, transparente, zylindrische Aussenrohr 1 hat eine Gesamtlänge von 152,8 mm und einen Aussendurchmesser von 12,2 mm. Das Aussenrohr 1 hat an einem Ende einen vorstehenden, umlaufenden, 4 mm langen Kragen 49 mit einem Aussendurchmesser von 13,5 mm. Der Kragen 49 weist zwei sich gegenüberliegende Löcher 3 mit einem Durchmesser von 1,8 mm und an seiner Innenwand eine Vertiefung auf. Das dem Kragen 49 gegenüberliegende Ende des Aussenrohres 1 weist an seiner Innenseite eine umlaufende Verengung 2 mit einem Innendurchmesser von 9,4 mm auf. Das Aussenrohr 1 hat auf seiner Aussenseite zwei aufgedruckte, sich gegenüberliegende 100 mm lange Skalen von 0 g bis 100 g.

Das Innenrohr 4 wird mit dem Boden voraus in das Aussenrohr 1 von der Seite mit den zwei Löchern 3, gemäss Figur 11, Schritt B, eingeschoben.

Die aus Polyoxymethylen (POM) im Spritzgussverfahren hergestellte Federfassung 9 hat eine Gesamtlänge von 12 mm und eine zylindrische Grundform. In ihrem Innern hat die Federfassung 9 eine zylindrische achsiale Bohrung 32 mit einem Durchmesser von 4,1 mm. Die Federfassung 9 hat an einem Ende einen 0,8 mm langen, umlaufenden ersten Flansch 33 mit einem Durchmesser von 6,7 mm. An diesen ersten Flansch 33 schliesst sich ein 1,3 mm langes, erstes zylindrisches Zwischenstück 34 mit einem Durchmesser von 5 mm an. An dieses erste, zylindrische Zwischenstück 34 schliesst sich ein 1 mm langer, zweiter Flansch 50 mit einem Durchmesser von 6,7 mm an. An diesen zweiten Flansch 50 schliesst sich ein 5,1 mm langes, zweites zylindrisches Zwischenstück 56 mit einem Durchmesser von 5,6 mm an. Der zweite Flansch 50 und das zweite zylindrische Zwischenstück 56 weisen je zwei parallele und zur Mittelachse der Federfassung 9 symmetrisch angeordnete Abflachungen 57 auf. Der Abstand dieser Abflachungen 57 beträgt je 5 mm. An dem dem ersten Flansch 33 gegenüberliegenden Ende der Federfassung 9 befindet sich ein Aussengewinde 10 mit einem Durchmesser von 6,7 mm und mit vier Gewindeumgängen mit einer Steigung von 0,9 mm.

Die zylindrische Spiralfeder 11 aus Runddraht hat eine Länge von 112 mm, eine Drahtstärke von 0,39 mm, eine Windungszahl von 120, einen Innendurchmesser von 5,6 mm und eine einseitig angeformte halbrunde Oese 12. Diese Spiralfeder 11 hat eine Wägekapazität von 0 g bis 120 g.

Die Spiralfeder 11 ist auf der Seite ohne angeformte halbrunde Oese 12 mit vorerst fünf Windungen in das Aussengewinde 10 der Federfassung 9 klemmend, gemäss Figur 11, Schritt D, eingeschraubt. Die Spiralfeder 11 wird anschliessend für den genannten Messbereich in herkömmlicher Art justiert, indem der Federweg mit einem geeichten Gewicht überprüft wird und je nach Abweichung von der Solllänge der Skala mehr oder weniger zusätzliche Federwindungen in der Federfassung 9 eingeschraubt werden.

Die aus Polyoxymethylen (POM) im Spritzgussverfahren hergestellte Abschlussöse 20 weist eine zylindrische Scheibe 21 mit einem Durchmesser von 12 mm und einer Dicke von 2 mm auf. Auf der einen Seite dieser Scheibe 21 befindet sich eine 3 mm dicke und 9 mm lange Lasche mit einer Oeffnung, deren Durchmesser 5 mm beträgt. Die Mittelachse der Abschlussöse 20 geht durch das Zentrum der zylindrischen Scheibe 21 und steht rechtwinklig zu ihr. Auf der andern Seite dieser Scheibe 21 befindet sich ein zylindrischer und konzentrischer Zapfen 22 mit einem Durchmesser von 4 mm und einer Länge von 14 mm. Dieser Zapfen 22 geht in eine asymmetrische Hakenspitze 23 über. Dieser Zapfen 22 hat eine schlitzförmige, 4,6 mm lange und 2 mm breite Aussparung 24 mit halbrunden Enden. Die verbleibenden Wandungen des Zapfens 22 weisen Federeigenschaften auf. Auf der Aussenseite des Zapfens 22 befinden sich zwei sich gegenüberliegende, keilförmige Nocken 25. Der Abstand zwischen den Nocken 25 und der zylindrischen Scheibe 21 beträgt 1,6 mm. Der Zapfen 22 weist eine einseitig schräge Fläche 26 mit einer Länge von 2,7 mm auf, welche zusammen mit der 2,2 mm breiten Nase 27 der asymmetrischen Hakenspitze 23 einen Einschnitt 28 bildet. Der Einschnitt 28 ist 0,65 mm dick. Dieser Einschnitt 28 geht in eine 1,3 mm hohe und 1 mm breite Aussparung 29 über. Die Nase 27 und die der Nase 27 gegenüberliegende Rückwand 30 der asymmetrischen Hakenspitze 23 verjüngen sich zu einem abgerundeten Dorn 31.

Die Abschlussöse 20 ist mit dem Dorn 31 voraus in das zentrische Loch 8 des vormontierten Innenrohres 4, gemäss Figur 11, Schritt C, eingeschoben und wird mittels den Nocken 25 bleibend am Boden des Innenrohres 4 gehalten.

Die zylindrische Spiralfeder 11 mit der vormontierten Federfassung 9 wird mit der halbrunden Oese 12 voraus in das vormontierte Innenrohr 4, gemäss Figur 11, Schritt E, geschoben und eingepresst. Dabei greift der Dorn 31 auf einer Seite der angeformten halbrunden Oese 12 in die Spiralfeder 11, wodurch die Oese 12 zwangsweise schräg über die Nase 27 geschoben wird und schliesslich unter Zug durch den Einschnitt 28 unwiderruflich in die Aussparung 29 der Abschlussöse 20 einrastet.

Der aus Polyoxymethylen (POM) im Spritzgussverfahren hergestellte Fassungshalter 35 hat eine zylindrische Grundform mit einem Durchmesser von 9,9 mm und einer Höhe von 7 mm. Der Fassungshalter 35 hat ein durchgehendes achsiales und zentrisches Loch 36. Dieses Loch 36 umfasst eine konische Einführung, welche in ein 2,5 mm langes M4 Innengewinde 58 übergeht, das auf die Stellschraube 13 abgestimmt ist. Dieses M4 Innengewinde 58 wird durch einen U-förmigen Schlitz 37 begrenzt, welcher rechtwinklig zur Mittelachse des Fassungshalters 35 steht, 0,9 mm dick ist und einen Durchmesser von 6,9 mm hat. Dieser U-förmige Schlitz 37 wird durch eine ebenfalls U-förmige, 1,1 mm dicke Aussparung 38 mit einem Durchmesser von 5,1 mm begrenzt. Die Zentren der Halbkreise des U-förmigen Schlitzes 37 und der U-förmigen Aussparung 38 liegen auf der Mittelachse des Fassungshalters 35. Die beiden Schenkel des U-förmigen Schlitzes 37 und die beiden Schenkel der U-förmigen Aussparung 38 sind alle parallel. Die U-Formen des Schlitzes 37 und der Aussparung 38 öffnen auf die gleiche Seite. Die eine Seite der U-förmigen Aussparung 38 bildet die zur Mittelachse des Fassungshalters 35 senkrecht stehende Abschlussfläche 39. Ueber die zylindrische Aussenwand des Fassungshalters 35 und parallel zu seiner Mittelachse zieht sich ein 4,3 mm breiter, 5 mm langer und 1,4 mm tiefer, durchgehender Kanal 40, welcher sich mittig der Oeffnung des U-förmigen Schlitzes 37 befindet. Die nicht seitliche Begrenzungsfläche hat eine zur zylindrischen Grundform des Fassungshalters 35 konzentrische Form. An der zylindrischen Aussenwand des Fassungshalters 35 ist eine umlaufende Nut 55 eingelassen.

Der aus Polyoxymethylen (POM) im Spritzgussverfahren hergestellte Deckel 41 ist 37,8 mm lang, hat eine 1,8 mm dicke, gerundete Abschlusskappe 43 mit einem Durchmesser von 12,1 mm und ein 4,1 mm hohes zylindrisches Unterteil 45 mit einem Durchmesser von 10,5 mm. Dieses Unterteil 45 hat eine umlaufende 2 mm hohe Nut 46, welche von zwei sich gegenüberliegenden Stegen unterbrochen ist, wobei einer dieser Stege 47 vorsteht. Der Deckel 41 weist ein durchgehendes, achsiales, zentrisches und zehneckiges Loch 48 mit einem Innendurchmesser von 4,1mm auf. Der Deckel 41 umfasst auch einen zur Mittelachse des Deckels 41 parallelen, angeformten, 4,1 mm breiten und 1,4 mm dicken Sporn 42 mit einer Gesamtlänge von 31,9 mm. Die Aussenwand des Sporns 42 weist einen Radius von 5,1 mm auf, und die Innenwand ist zur Aussenwand konzentrisch. Das der Abschlusskappe 43 gegenüberliegende Ende des Sporns 42 hat eine 7,2 mm breite und 2 mm hohe Verdickung 51.

Die vormontierte Federfassung 9 wird aus dem Innenrohr 4 herausgezogen und der erste Flansch 33 wird radial in den U-förmigen Schlitz 37 des Fassungshalters 35, gemäss Figur 11, Schritt F, geschoben. Anschliessend wird der Sporn 42 in den Kanal 40 des Fassungshalters 35 eingelegt, und die so montierten Teile werden in das Aussenrohr 1 geschoben und solange gedreht, bis der vorstehende Steg 47 am Deckel 41 in die Vertiefung in der Innenwand des Aussenrohres 1 einrastet. Anschliessend wird der Deckel 41 vollständig in das Aussenrohr 1, gemäss Figur 11, Schritt G, geschoben.

Die aus Polyoxymethylen (POM) im Spritzgussverfahren hergestellte Stellschraube 13 umfasst ein 44 mm langes M4 Gewinde 14, das auf das M4 Innengewinde 58 des Fassungshalter 35 abgestimmt ist, einen 9 mm langen, randrierten, zylindrischen Schraubenkopf 15 mit einem Durchmesser von 6,8 mm und ein dazwischen liegendes 8,6 mm langes zylindrisches Teil 16 mit einem Durchmesser von 4,0 mm. Der Schraubenkopf 15 hat auf der dem Gewinde 14 gegenüberliegenden Seite ein 8 mm tiefes achsiales, zentrisches Sackloch mit einem Durchmesser von 3 mm. Das zylindrische Teil 16 weist eine 11,9 mm lange, schlitzförmige Aussparung 17 auf, die den verbleibenden Wandungen Federeigenschaften verleiht. Das zylindrische Teil 16 weist an seiner dem Gewinde 14 zugewandten Seite zwei sich gegenüberliegende Nocken 18 auf. An den verbleibenden Wandungen befinden sich zwei gegenüberliegende, vorstehende Oliven 52.

Die Stellschraube 13 wird durch das Loch 48 des vormontierten Deckels 41 geschoben, bis das Gewinde 14 auf das M4 Innengewinde 58 des Fassungshalters 35 auftrifft. Die Stellschraube 13 wird etwa 20 mm in das M4 Innengewinde 58 des Fassungshalters 35, gemäss Figur 11, Schritt H, eingeschraubt. Anschliessend wird die Stellschraube 13 bis zum Anschlag in den Deckel 41, gemäss Figur 11, Schritt I, gepresst und wird mittels den an der Stellschraube 13 vorhandenen, federnden Nocken 18 bleibend im Deckel 41 gehalten.

Der Aufhängebügel 19 ist aus rundem Stahldraht mit einem Durchmesser von 1,7 mm gefertigt, ist symmetrisch, plan und U-förmig. Die halbkreisförmige Rundung hat einen Radius von 10 mm und die beiden daran anschliessenden Schenkel haben eine Länge von 20 mm. In unmontiertem Zustand sind die Schenkel leicht zusammenlaufend, um im montierten Zustand parallel zu sein und eine Vorspannung aufzuweisen. Die Enden der beiden Schenkel sind spiegelbildlich und rechtwinklig zueinander gebogen und sind je 6 mm lang.

Die Schenkel des Aufhängebügels 19 werden etwas aufgebogen, und die Enden der beiden Schenkel werden in die Löcher 3 im Aussenrohr 1, gemäss Figur 11, Schritt K, eingeführt, sodass sie in die Nut 46 im Deckel 41 eingreifen und diesen im Aussenrohr 1 bleibend festhalten.

In das Loch in der Abschlussöse 20 wird eine marktübliche Klammer oder ein Haken zur Aufnahme / Halterung des Wägegutes eingehängt.

Diese Federwaage wird wie folgt in Betrieb genommen:

Die Federwaage wird an ihrem Aufhängebügel 19 vertikal aufgehängt oder mit zwei Fingern ruhig am Aufhängebügel 19 gehalten.

Vor jeder Messung mit oder ohne Tara ist der Nullpunkt zu überprüfen und gegebenenfalls mit der Stellschraube 13 zu justieren.

Das Wägegut wird angehängt oder in ein tariertes Behältnis gegeben. Das Gewicht wird anschliessend an der Skala abgelesen.

In der vorliegenden Erfindung werden die folgenden Bezugszeichen verwendet:
- 1: Aussenrohr
- 2: Verengung
- 3: Löcher(Loch)
- 4: Innenrohr
- 5: Verdickung
- 6: Nut
- 7: O-Ring
- 8: Loch
- 9: Federfassung
- 10: Aussengewinde
- 11: Spiralfeder
- 12: Halbrunde Oese
- 13: Stellschraube
- 14: Gewinde
- 15: Schraubenkopf
- 16: Zylindrisches Teil
- 17: Schlitzförmige Aussparung
- 18: Nocken
- 19: Aufhängebügel
- 20: Abschlussöse
- 21: Scheibe
- 22: Zapfen
- 23: Hakenspitze
- 24: Aussparung
- 25: Nocken
- 26: Schräge Fläche
- 27: Nase
- 28: Einschnitt
- 29: Aussparung
- 30: Rückwand
- 31: Dorn
- 32: Bohrung
- 33: Umlaufender Flansch
- 34: Zylindrisches Zwischenstück
- 35: Fassungshalter
- 36: Loch
- 37: U-förmiger Schlitz
- 38: U-förmige Aussparung
- 39: Abschlussfläche
- 40: Kanal
- 41: Deckel
- 42: Sporn
- 43: Abschlusskappe
- 44: Rand
- 45: Unterteil
- 46: Hohlräume
- 47: Mittel
- 48: Loch
- 49: Kragen
- 50: Zweiter Flansch
- 51: Verdickung
- 52: Olive
- 53: Stirnseite
- 54: Kerbe
- 55: Umlaufende Nut
- 56: Zweites zylindrisches Zwischenstück
- 57: Abflachungen
- 58: Innengewinde.

## Patentansprüche

1. Federwaage, umfassend
- ein Aussenrohr (1), welches an einem Ende auf seiner Innenseite eine umlaufende Verengung (2) und am andern Ende zwei sich gegenüberliegende Löcher (3) sowie Mittel zur Verdrehsicherung aufweist,
- ein Innenrohr (4), welches auf seiner Aussenseite zylindrisch ist und an einem Ende einen Boden mit einem zentrischen Loch (8) und an seinem andern Ende eine umlaufende zylindrische konzentrische Verdickung (5) aufweist, in die eine umlaufende Nut (6) eingelassen ist, in welche ein O-Ring (7) mit Markierfunktion eingelegt ist,
wobei das Innenrohr (4) mit dem genannten Boden voraus in das Aussenrohr (1) von derjenigen Seite mit den genannten Löchern (3) eingeschoben ist,
- eine Oese, welche in das Loch (8) im Boden des Innenrohres (4) eingeschoben und gehalten ist,
- eine Federfassung (9) mit Aussengewinde (10),
- eine zylindrische Spiralfeder (11) mit einseitig angeformter halbrunder Oese (12),
wobei die Spiralfeder (11) auf der Seite ohne angeformte halbrunde Oese (12) in das Aussengewinde (10) der Federfassung (9) eingeschraubt ist,
- eine Stellschraube (13) mit einem Gewinde (14), einem griffgünstig geformten Schraubenkopf (15) und einem dazwischen liegenden zylindrischen Teil (16), wobei
das zylindrische Teil (16) eine schlitzförmige Aussparung (17), die den verbleibenden Wandungen Federeigenschaften verleiht, und an seiner dem Gewinde (14) zugewandten Seite wenigstens zwei sich gegenüberliegende Nocken (18) aufweist,
der Aussendurchmesser des Schraubenkopfes (15) beim Uebergang zum zylindrischen Teil (16) grösser als der Aussendurchmesser des zylindrischen Teils (16) ist, und
der Aussendurchmesser des zylindrischen Teils (16) beim Uebergang zum Gewinde (14) grösser oder gleich dem Aussendurchmesser des Gewindes (14) ist, und
- einen Aufhängebügel (19),
**dadurch gekennzeichnet, dass**
die Oese eine Abschlussöse (20) ist, welche eine zylindrische Scheibe (21) aufweist, und wobei die Mittelachse der Abschlussöse (20) durch das Zentrum dieser zylindrischen Scheibe (21) geht und rechtwinklig zu ihr steht,
sich auf der einen Seite dieser zylindrischen Scheibe (21) ein Element befindet, welches die Anbringung einer Aufhängevorrichtung ermöglicht,
sich auf der anderen Seite dieser zylindrischen Scheibe (21) ein zylindrischer und konzentrischer Zapfen (22) befindet, welcher in eine asymmetrische Hakenspitze (23) übergeht und eine schlitzförmige Aussparung (24) aufweist,
sich an der Aussenseite des Zapfens (22) wenigstens zwei sich gegenüberliegenden Nocken (25) befinden, wobei zwischen den Nocken (25) und der zylindrischen Scheibe (21) ein Abstand vorhanden ist, und die verbleibenden Wandungen des Zapfens (22) mit Nocken (25) Federeigenschaften aufweisen,
der Zapfen (22) eine einseitig schräge Fläche (26) aufweist, welche zusammen mit der Nase (27) der asymmetrischen Hakenspitze (23) einen Einschnitt (28) bildet,
dieser Einschnitt (28) in eine Aussparung (29) übergeht, und wobei der Anfang dieses Einschnittes (28) näher an der zylindrischen Scheibe (21) ist, als das Ende dieses Einschnittes (28),
sich die Nase (27) und die der Nase (27) gegenüberliegende Rückwand (30) der asymmetrischen Hakenspitze (23) zu einem abgerundeten Dorn (31) verjüngen, wobei der Endpunkt des Dorns (31) zwischen der theoretischen Verlängerung dieser Rückwand (30) des Zapfens (22) und der Mittelachse liegt, und wobei
die Spitze des Dorns (31) und die Spitze der Nase (27) auf der Symmetrieebene der Abschlussöse (20) und auf verschiedenen Seiten bezüglich der Mittelachse der Abschlussöse (20) liegen,
wobei die Abschlussöse (20) mit dem Dorn (31) voraus in das zentrische Loch (8) im Boden des Innenrohres (4) eingeschoben ist und mittels den Nocken (25) bleibend am Boden auf der Innenseite des Innenrohres (4) gehalten ist,
- die Federfassung (9) eine zylindrische Grundform hat und in ihrem Innern eine zylindrische achsiale Bohrung (32) und an einem Ende einen umlaufenden Flansch (33) aufweist, wobei sich an diesen Flansch (33) ein zylindrisches Zwischenstück (34) anschliesst, und sich am anderen Ende der Federfassung (9) ein Aussengewinde (10) befindet,
wobei die in die Federfassung (9) klemmend eingeschraubte zylindrische Spiralfeder (11) mit der angeformten, halbrunden Oese (12) voraus derart in das Innenrohr (4) eingeschoben ist, dass die angeformte halbrunde Oese (12) unwiderruflich in die Aussparung (29) der Abschlussöse (20) eingehängt bleibt,
- dass ein Fassungshalter (35) vorhanden ist, welcher eine zylindrische Grundform mit einem durchgehenden achsialen und zentrischen Loch (36) hat, welches entlang der Mittelachse des Fassungshalters (35) verschiedene Durchmesser aufweist,
sich gemäss einer ersten Variante über einen Teil der Länge dieses Loches (36) ein Innengewinde (58) erstreckt, oder
sich gemäss einer zweiten Variante zwischen einem U-förmigen Schlitz (37) und der Stirnseite (53) des Fassungshalters (35) ein Schlitz mit zwei parallelen Seiten und wenigstens zwei Ecken befindet, welcher eine mehrkantige Mutter gegen Verdrehung gesichert aufnehmen kann,
wobei das genannte Innengewinde (58) seinerseits durch den genannten U-förmigen Schlitz (37) begrenzt wird, welcher rechtwinklig zur Mittelachse des Loches (36) im Fassungshalter (35) steht,
das Zentrum des Halbkreises des U-förmigen Schlitzes (37) auf der Mittelachse des Fassungshalters (35) liegt,
dieser U-förmige Schlitz (37) durch eine U-förmige, kleinere Aussparung (38) begrenzt wird,
das Zentrum des Halbkreises der U-förmigen Aussparung (38) ebenfalls auf der Mittelachse des Fassungshalters (35) liegt,
die beiden Schenkel des U-förmigen Schlitzes (37) und die beiden Schenkel der U-förmigen Aussparung (38) alle parallel sind, wobei die U-Form des Schlitzes (37) und die U-Form der Aussparung (38) auf die gleiche Seite öffnen,
wobei der Radius des U-förmigen Schlitzes (37) grösser ist als der Radius der U-förmigen Aussparung (38),
die eine Seite dieser U-förmigen Aussparung (38) die zur Mittelachse des Loches (36) im Fassungshalter (35) senkrecht stehende Abschlussfläche (39) bildet,
sich über die zylindrische Aussenwand des Fassungshalters (35) und parallel zu seiner Mittelachse ein durchgehender Kanal (40) zieht,
wobei der Fassungshalter (35) an der Stelle seines U-förmigen Schlitzes (37) radial über den Flansch (33) der Federfassung (9) gestülpt ist, und wobei die Federfassung (9) im Fassungshalter (35) zentrisch frei drehbar ist,
- dass ein Deckel (41) mit Sporn (42) vorhanden ist,
wobei der Deckel (41) eine Abschlusskappe (43) mit vorstehendem, umlaufendem Rand (44) und ein zylinderförmiges Unterteil (45) aufweist,
das zylinderförmige Unterteil (45) einspringende Hohlräume (46) und Mittel zur Verdrehsicherung aufweist,
der Deckel (41) ein durchgehendes, achsiales und zentrisches Loch (48) und einen stabförmig ausgebildeten und parallel zur Mittelachse des Deckels (41) angeordneten Sporn (42) aufweist,
- die im Aussenrohr (1) und die am Deckel (41) vorhandenen Mittel zur Verdrehsicherung aufeinander abgestimmt sind und ineinander eingreifen,
- der Sporn (42) in den Kanal (40) des Fassungshalters (35) eingelegt ist und sich der Sporn (42), zusammen mit dem Fassungshalter (35) und der Federfassung (9), im Aussenrohr (1) befinden und von diesem zusammengehalten werden, und wobei der vorstehende, umlaufende Rand (44) der Abschlusskappe (43) auf der Stirnseite des Kragens (49) am Aussenrohr (1) aufliegt,
- der Fassungshalter (35) und der eingelegte Sporn (42) den im Innern des Aussenrohres (1) vorhandenen Raum nahezu vollständig ausfüllen,
- das Gewinde (14) der Stellschraube (13) und das Gewinde des Fassungshalters (35) aufeinander abgestimmt und zusammengeschraubt sind,
- der Durchmesser der zylindrischen achsialen Bohrung (32) in der Federfassung (9) geringfügig grösser ist als der Aussendurchmesser des Gewindes (14) der Stellschraube (13), und somit die Federfassung (9) durch das Gewinde (14) der Stellschraube (13) in ihrer Drehbarkeit nicht behindert wird,
- sich das zylindrische Teil (16) der Stellschraube (13) im Loch (48) des Deckels (41) befindet und durch die Nocken (18) an der Stellschraube (13) im Deckel (41) achsial nicht verschiebbar aber drehbar ist,
- wobei die Drehung am Schraubenkopf (15) ein Gleiten des Fassungshalters (35) entlang des Sporns (42) bewirkt, und der Fassungshalter (35) gleichzeitig die Federfassung (9) mit allen daran befestigten Teilen achsial mitbewegt und somit die Nullpunkt-Justierung und die Tara-Funktion der Federwaage gewährleistet, und
- der Aufhängebügel (19) durch die Löcher (3) im Aussenrohr (1) hindurchgeht und in die einspringenden Hohlräume (46) im Deckel (41) eingreift und somit den Deckel (41) im Aussenrohr (1) fixiert.

2. Federwaage nach Anspruch 1, **dadurch gekennzeichnet, dass** die im Aussenrohr (1) vorhandenen Mittel zur Verdrehsicherung mindestens eine Vertiefung zur Aufnahme von mindestens einem vorstehenden Steg (47) am Deckel (41) umfassen.

3. Federwaage nach einem der Ansprüche 1 bis 2, **dadurch gekennzeichnet, dass** das Aussenrohr (1) auf der Seite mit den zwei Löchern (3) einen abschliessenden, vorstehenden, umlaufenden Kragen (49) mit Verstärkungsfunktion aufweist, wobei sich diese Löcher (3) im Kragen (49) befinden.

4. Federwaage nach einem der Ansprüche 1 bis 3, **dadurch gekennzeichnet, dass** das Aussengewinde (10) an der Federfassung (9) von zwei bis acht, insbesondere drei bis vier, Gewindeumgänge hat, und dass der Innendurchmesser des ersten Gewindeumganges kleiner ist als derjenige des letzten Gewindeumganges.

5. Federwaage nach einem der Ansprüche 1 bis 4, **dadurch gekennzeichnet, dass** sich bei der Federfassung (9) zwischen dem umlaufenden Flansch (33) und dem Aussengewinde (10) ein zweiter Flansch (50) befindet.

6. Federwaage nach einem der Ansprüche 1 bis 5, **dadurch gekennzeichnet, dass** der im Fassungshalter (35) vorhandene Kanal (40) zwei gegenüberliegende parallele seitliche Begrenzungsflächen hat, dass die nicht seitliche Begrenzungsfläche dieses Kanals (40) eine zur zylindrischen Grundform des Fassungshalters (35) konzentrische Form aufweist, und dass sich dieser Kanal (40) mittig der Oeffnung des U-förmigen Schlitzes (37) befindet.

7. Federwaage nach einem der Ansprüche 1 bis 6, **dadurch gekennzeichnet, dass** beim Deckel (41) mit Sporn (42) die einspringenden Hohlräume (46) die Form einer Nut haben, welche durch zwei sich gegenüberliegende Stege unterbrochen ist, wobei einer dieser Stege (47) vorsteht und als Verdrehsicherung dient.

8. Federwaage nach einem der Ansprüche 1 bis 7, **dadurch gekennzeichnet, dass** das im Deckel (41) vorhandene durchgehende, achsiale und zentrische Loch (48) mehreckig, beispielsweise zehneckig, ist.

9. Federwaage nach einem der Ansprüche 1 bis 8, **dadurch gekennzeichnet, dass** der Sporn (42) an den Deckel (41) angeformt und stabförmig ausgebildet sowie der Form der Innenwand des Aussenrohres (1) angepasst ist.

10. Federwaage nach einem der Ansprüche 1 bis 9, **dadurch gekennzeichnet, dass** das der Abschlusskappe (43) gegenüberliegende Ende des Sporns (42) eine Verdickung (51) aufweist, welche die Funktion eines Anschlages für den Fassungshalter (35) hat.

11. Federwaage nach einem der Ansprüche 1 bis 10, **dadurch gekennzeichnet, dass** die in das Aussengewinde (10) der Federfassung (9) klemmend eingeschraubte Spiralfeder (11) zusätzlich durch Verklebung oder Verschweissung auf dem Aussengewinde (10) oder durch einen O-Ring auf dem Zwischenstück (34, 56) fixiert ist.

12. Federwaage nach einem der Ansprüche 1 bis 11, **dadurch gekennzeichnet, dass** der Deckel (41) mit dem Aussenrohr (1) mittels Verklebung oder Verschweissung derart verbunden ist, dass eine Trennung dieser Teile (41), (1) nur unter Zerstörung möglich ist.

## Claims

1. Spring scale, comprising
- an outer tube (1), which has on one end on its inner side a circulating constriction (2) and on the other end two opposite holes (3) as well as means to avoid distortion,
- an inner tube (4), which is cylindrical on its outer side and which has on one end a bottom with a centric hole (8), and which has on its other end a circulating cylindrical concentric thickening (5), in which a circulating groove (6) is embedded, in which an O-ring (7) with marking function is inserted,
whereby the inner tube (4) is inserted with said bottom ahead into the outer tube (1) from the side with the said holes (3),
- an eye, which is inserted and held in the hole (8) in the bottom of the inner tube (4),
- a spring holder (9) with outer thread (10),
- a cylindrical spiral spring (11) on one side equipped with a semicircular eye (12),
whereby the spiral spring (11) on its side without said semicircular eye (12) is screwed into the outer thread (10) of the spring holder (9),
- a set screw (13) with a thread (14), a handy shaped screw head (15) and a cylindrical section (16), which is located in-between them, whereby
the cylindrical section (16) has a slot-shaped recess (17), which imparts elastic behaviour characteristics to the remaining walls, and which has on the side of the thread (14) at least two opposite cams (18),
the outer diameter of the screw head (15) is larger near the transition to the cylindrical section (16) than the outer diameter of the cylindrical section (16) itself, and
the outside diameter of the cylindrical section (16) is larger or equal to the outer diameter of the thread (14) near the transition to the thread (14), and
- a hanger (19),
**characterized in that**
the eye is an end eye (20), which comprises a cylindrical disk (21), and whereby the middle axis of the end eye (20) goes through the center of this cylindrical disk (21) and is rectangular to it,
on one side of this cylindrical disk (21) an element is located, which enables the mounting of a supporting device,
on the other side of this cylindrical disk (21), a cylindrical and concentric tap (22) is located, which passes over into an asymmetrical hook tip (23) and having a slot-shaped recess (24),
at the outside of the tap (22) are located at least two opposite cams (25), whereby there is a space between the cams (25) and the cylindrical disk (21), and whereby the remaining walls of the tap (22) with cams (25) impart elastic behaviour characteristics to the remaining walls,
the tap (22) has on one side a bevel surface (26), which forms together with the nose (27) of the asymmetrical hook tip (23) a cut (28),
this cut (28) turns into a recess (29), and whereby the beginning of this cut (28) is closer to the cylindrical disk (21) than the end of this cut (28),
the nose (27) and the rear wall (30) opposite to the nose (27) of the asymmetrical hook tip (23) taper to a rounded thorn (31), whereby the end point of the thorn (31) is located between the theoretical extension of this rear wall (30) of the tap (22) and the middle axis, and whereby
the tip of the thorn (31) and the tip of the nose (27) are located on the symmetry plane of the end eye (20) and on different sides with regard to the middle axis of the end eye (20),
whereby the end eye (20) with the thorn (31) ahead is inserted into the centric hole (8) in the bottom of the inner tube (4) and is held permanently on the bottom of the inside of the inner tube (4) by means of the cams (25),
- the spring holder (9) has a cylindrical basic form and has a cylindrical axial drilling (32) in its interior and has on one end a circulating flange (33), whereby this flange (33) has an adjacent cylindrical section (34), and whereby at the other end of the spring holder (9) is located an outer thread (10),
whereby the cylindrical spiral spring (11) is screwed and clamped into the spring holder (9) and is inserted, with the semicircular eye (12) ahead, into the inner tube (4) in such a way that the semicircular eye (12) is hung up irrevocably in the recess (29) of the end eye (20),
- that a holder bearing (35) is present, which has a cylindrical basic form with a continuous axial and centric hole (36), which has different diameters along the middle axis of the holder bearing (35),
according to a first variation an inner thread (58) extends over a part of the length of this hole (36), or
according to a second variation a slot with two parallel sides and at least two edges, whereby this slot can receive a many-sided nut which is secured against rotation, is located between a U-shaped slot (37) and the front side (53) of the holder bearing (35),
whereby said inner thread (58) ends at said U-shaped slot (37), which is rectangular to the middle axis of the hole (36) in the holder bearing (35),
the center of the semi-circle of the U-shaped slot (37) is located on the middle axis of the holder bearing (35),
this U-shaped slot (37) ends in a U-shaped, smaller recess (38),
the center of the semi-circle of the U-shaped recess (38) is also located on the middle axis of the holder bearing (35),
the two thighs of the U-shaped slot (37) and the two thighs of the U-shaped recess (38) are all parallel, whereby the U-form of the slot (37) and the U-form of the recess (38) open towards the same side,
whereby the radius of the U-shaped slot (37) is larger than the radius of the U-shaped recess (38),
one side of this U-shaped recess (38) forms the end surface (39) which is rectangular to the middle axis of the hole (36) in the holder bearing (35),
whereby a continuous channel (40) extends over the cylindrical outer wall of the holder bearing (35) and is parallel to its middle axis,
whereby the holder bearing (35) at the location of its U-shaped slot (37) is radially put over the flange (33) of the spring holder (9), and whereby the spring holder (9) is centric and freely swivelling in the holder bearing (35),
- that a cover (41) with spur (42) is present,
whereby the cover (41) has an end cap (43) with a protruding, circular edge (44) and a cylindrical lower part (45),
the cylindrical lower part (45) has re-entrant cavities (46) and means against involuntary rotation,
the cover (41) has a continuous, axial and centric hole (48) and parallel to the middle axis of the cover (41) a rod-shaped spur (42),
- the means against involuntary rotation in the outer tube (1) and the cover (41) are adjusted to each other and are interlocking,
- the spur (42) is inserted into the channel (40) of the holder bearing (35) and the spur (42), together with the holder bearing (35) and the spring holder (9) are all located in the outer tube (1) and are held together by it, and whereby the protruding, circulating edge (44) of the end cap (43) is resting on the front side of the collar (49) of the outer tube (1),
- the holder bearing (35) and the inserted spur (42) nearly completely fill the interior space of the outer tube (1),
- the thread (14) of the set screw (13) and the thread of the holder bearing (35) are adjusted to each other and are screwed together,
- the diameter of the cylindrical axial drilling (32) in the spring holder (9) is slightly larger than the outside diameter of the thread (14) of the set screw (13), and thus the spring holder (9) is not hindered in its swivel-lingness by the thread (14) of the set screw (13),
- the cylindrical section (16) of the set screw (13) is located in the hole (48) of the cover (41), whereby the set screw (13) remains swivellable and is axially locked by the cams (18) of the set screw (13) in the cover (41),
- whereby the rotation of the screw head (15) initiates a sliding of the holder bearing (35) along the spur (42), and the holder bearing (35) simultaneously convects axially the spring holder (9) with all parts attached to it, and thus warranties the zero point adjustment and the tare function of the spring scale, and
- the hanger (19) goes through the holes (3) in the outer tube (1) and engages to the re-entrant cavities (46) in the cover (41) and thus fixes the cover (41) in the outer tube (1).

2. Spring scale according to claim 1, **characterized in that** the means against involuntary rotation in the outer tube (1) comprise at least one cavity for receiving at least one protruding bar (47) in the cover (41).

3. Spring scale according to one of claims 1 to 2, **characterized in that** the outer tube (1) has on the side with the two holes (3) a final, protruding, circulating collar (49) with reinforcement function, whereby these holes (3) are located in the collar (49).

4. Spring scale according to one of claims 1 to 3, **characterized in that** the outer thread (10) in the spring holder (9) has from two to eight, especially three to four, turns of the tread, and that the inner diameter of the first turn of the thread is smaller than the last turn of the thread.

5. Spring scale according to one of claims 1 to 4, **characterized in that** there is a second flange (50) on the spring holder (9) between the circulating flange (33) and the outer thread (10).

6. Spring scale according to one of claims 1 to 5, **characterized in that** the channel (40) which is present in the holder bearing (35) has two opposite parallel lateral limiting surfaces, that the non-lateral limiting surface of this channel (40) has a shape, which is concentric to the cylindrical basic form of the holder bearing (35), and that this channel (40) is located in the middle of the opening of the U-shaped slot (37).

7. Spring scale according to one of claims 1 to 6, **characterized in that** the re-entrant cavities (46) in the cover (41) with spur (42) have the shape of a groove, which is interrupted by two opposite bars, whereby one of these bars (47) serves as means against involuntary rotation.

8. Spring scale according to one of claims 1 to 7, **characterized in that** the continuous, axial and centric hole (48) which is present in the cover (41) is polygonal, for example ten-angular.

9. Spring scale according to one of claims 1 to 8, **characterized in that** the spur (42) is a part of the cover (41) and is rod-shaped and adapted to the form of the inner wall of the outer tube (1).

10. Spring scale according to one of claims 1 to 9, **characterized in that** the end of the spur (42), which is located opposite to the end cap (43), has a thickening (51), which has the function of a stop gauge for the holder bearing (35).

11. Spring scale according to one of claims 1 to 10, **characterized in that** the spiral spring (11) screwed and clamped info the outer thread (10) of the spring holder (9) is fixed additionally by gluing or welding onto the outer thread (10) or fixed by an O-ring on the intermediate piece (34, 56).

12. Spring scale according to one of claims 1 to 11, **characterized in that** the cover (41) is connected with the outer tube (1) by means of gluing or welding in such a way that a separation of these parts (41),(1) is only possible by destruction.

## Revendications

1. Balance à ressort, qui comprend:
- un tube extérieur (1) qui présente à une extrémité et sur son côté intérieur un rétrécissement périphérique (2) et à son autre extrémité deux trous (3) mutuellement opposés ainsi que des moyens empêchant sa rotation,
- un tube intérieur (4), cylindrique sur son côté extérieur, qui présente à une extrémité un fond dans lequel est ménagé un trou central (8) et à son autre extrémité un épaississement périphérique cylindrique concentrique (5) dans lequel est ménagée une rainure périphérique (6) dans laquelle est insérée une bague torique (7) qui joue le rôle d'un repère,
le tube intérieur (4) étant enfoncé avec son fond en avant dans le tube extérieur (1) en partant du côté doté desdits trous (3),
- un oeillet, qui est enfoncé et maintenu dans le trou (8) ménagé dans le fond du tube intérieur (4),
- une monture de ressort (9) doté d'un filet extérieur (10),
- un ressort hélicoïdal cylindrique (11) sur un côté duquel est formé un oeillet semi-circulaire (12),
le ressort hélicoïdal (11) étant vissé par son côté sans oeillet semi-circulaire (12) dans le filet extérieur (10) de la monture de ressort (9),
- une vis d'ajustement (13) dotée d'un filet (14), d'une tête de vis (15) dont la forme facilite la saisie, avec entre elles une partie cylindrique (16),
la partie cylindrique (16) présentant une découpe (17) en forme de fente qui donne au reste des parois des propriétés élastiques et au moins deux cames (18) mutuellement opposées sur son côté tourné vers le filet (14),
le diamètre extérieur de la tête de vis (15) étant plus grand que le diamètre extérieur de la partie cylindrique (16) à la transition vers la partie cylindre (16),
le diamètre extérieur de la partie cylindrique (16) étant plus grand ou égal au diamètre extérieur du filet (14) à la transition vers le filet (14), et
- un étrier de suspension (19),
**caractérisé en ce que**
l'oeillet est un oeillet de fermeture (20) qui présente un disque cylindrique (21), l'axe central de l'oeillet de fermeture (20) passant par le centre de ce disque cylindrique (21) et lui étant perpendiculaire,
un élément qui permet d'installer un dispositif de suspension est situé sur un côté de ce disque cylindrique (21),
sur l'autre côté de ce disque cylindrique (21) se trouve un tourillon cylindrique et concentrique (22) qui se prolonge en une pointe asymétrique de crochet (23) et une découpe (24) en forme de fente,
au moins deux cames mutuellement opposées (25) sont situées sur le côté extérieur du tourillon (22), un écart étant prévu entre les cames (25) et le disque cylindrique (21) et le reste des parois du tourillon (22) doté de cames (25) présente des propriétés élastiques,
le tourillon (22) présente d'un côté une surface oblique (26) qui forme avec le bec (27) de la pointe asymétrique de crochet (23) une entaille (28),
cette entaille (28) se prolonge en une découpe (29) et le début de cette entaille (28) est plus proche du disque cylindrique (21) que l'extrémité de cette entaille (28),
le bec (27) et la paroi arrière (30) de la pointe asymétrique de crochet (23) opposée au bec (27) se rétrécissent en un mandrin arrondi (31), le point d'extrémité du mandrin (31) étant situé entre le prolongement théorique de cette paroi arrière (30) du tourillon (22) et l'axe central, et
la pointe du mandrin (31) et la pointe du bec (27) sont situées sur le plan de symétrie de l'oeillet de fermeture (20) et sur des côtés différents par rapport à l'axe central de l'oeillet de fermeture (20),
l'oeillet de fermeture (20) étant inséré avec le mandrin (31) en avant dans le trou central (8) ménagé dans le fond du tube intérieur (4) et étant maintenu définitivement sur le fond du côté intérieur du tube intérieur (4) au moyen des cames (25),
- la monture de ressort (9) a une forme de base cylindrique et présente à l'intérieur un alésage cylindrique axial (32) et à une extrémité une bride périphérique (33), une pièce intermédiaire cylindrique (34) se raccordant à cette bride (33) et un filet extérieur (10) étant situé à l'autre extrémité de la monture de ressort (9),
le ressort hélicoïdal cylindrique (11) vissé de manière serrée dans la monture de ressort (9) étant enfoncé avec l'oeillet semi-circulaire (12) en avant dans le tube intérieur (4) de telle sorte que l'oeillet semi-circulaire (12) qui y est ménagé reste suspendu de manière irréversible dans la découpe (29) de l'oeillet de fermeture (20),
- **en ce qu'**un support de monture (35), qui a une forme de base cylindrique traversée par un trou axial et central (36) qui présente différents diamètres le long de l'axe central du support de monture (35), est prévu,
dans une première variante, un filet intérieur (58) s'étend sur une partie de la longueur de ce trou (36), ou
dans une deuxième variante, une fente qui présente deux côtés parallèles et au moins deux coins est située entre une fente (37) en forme de U et le côté frontal (53) du support de monture (35), la fente pouvant recevoir et empêcher de tourner un écrou polygonal,
ledit filet intérieur (58) est lui-même délimité par ladite fente (37) en forme de U qui s'étend perpendiculairement à l'axe central du trou (36) dans le support de monture (35),
le centre du demi-cercle de la fente (37) en forme de U est situé sur l'axe central du support de monture (35),
cette fente (37) en forme de U est délimitée par une découpe (38) plus petite et en forme de U,
le centre du demi-cercle de la découpe (38) en forme de U est également situé sur l'axe central du support de monture (35),
les deux branches de la fente (37) en forme de U et les deux branches de la découpe (38) en forme de U sont toutes parallèles, la forme de U de la fente (37) et la forme de U de la découpe (38) s'ouvrant du même côté,
le rayon de la fente (37) en forme de U est plus grand que le rayon de la découpe (38) en forme de U,
un côté de cette découpe (38) en forme de U, forme la surface de fermeture (39) perpendiculaire à l'axe central du trou (36) ménagé dans le support de monture (35),
un canal continu (40) s'étend sur la paroi cylindrique extérieure du support de monture (35) parallèlement à son axe central,
le support de monture (35) étant embouti radialement au-dessus de la bride (33) de la monture de ressort (9) à l'emplacement de sa fente (37) en forme de U, et la monture de ressort (9) peut tourner librement au centre du support de monture (35),
- **en ce qu'**est prévu un couvercle (41) doté d'un ergot (42),
le couvercle (41) possédant un bonnet de fermeture (43) avec un bord périphérique en saillie (44) et une partie inférieure (45) de forme cylindrique,
la partie inférieure (45) de forme cylindrique présente des espaces creux (46) et des moyens empêchant sa rotation,
le couvercle (41) est traversé par un trou axial et central (48) et présente un ergot (42) en forme de barreau et disposé parallèlement à l'axe central du couvercle (41),
- les moyens anti-rotation prévus sur le tube extérieur (1) et sur le couvercle (41) sont accordés l'un à l'autre et s'engagent l'un dans l'autre,
- l'ergot (42) est inséré dans le canal (40) du support de monture (35) et avec le support de monture (35) et la monture de ressort (9), l'ergot (42) est situé dans le tube extérieur (1) et sont maintenus par ce dernier, le bord périphérique en saillie (44) du bonnet de fermeture (43) venant se placer sur le côté frontal du collet (49) ménagé sur le tube extérieur (1),
- le support de monture (35) et l'ergot (42) qui y a été inséré remplissent presque complètement l'espace présent à l'intérieur du tube extérieur (1),
- le filet (14) de la vis d'ajustement (13) et le filet du support de monture (35) sont accordés l'un à l'autre et sont filetés l'un dans l'autre,
- le diamètre de l'alésage cylindrique axial (32) ménagé dans la monture de ressort (9) est légèrement plus grand que le diamètre extérieur du filet (14) de la vis d'ajustement (13), la monture de ressort (9) n'étant ainsi pas empêchée de tourner par le filet (14) de la vis d'ajustement (13),
- la partie cylindrique (16) de la vis d'ajustement (13) est située dans le trou (48) du couvercle (41) et est empêchée de se déplacer axialement mais non de tourner par les cames (18) prévues sur la vis d'ajustement (13) dans le couvercle (41),
- la rotation de la tête de vis (15) ayant pour effet un coulissement du support de monture (35) le long de l'ergot (42), et le support de monture (35) entraîne en même temps axialement la monture de ressort (9) avec toutes les pièces qui y sont fixées, ce qui assure l'ajustement du point zéro et la fonction de tare de la balance à ressort, et
- l'étrier de suspension (19) traverse les trous (3) ménagés dans le tube extérieur (1) et s'engage dans les espaces creux (46) ménagés dans le couvercle (41) pour ainsi fixer le couvercle (41) dans le tube extérieur (1).

2. Balance à ressort selon la revendication 1, **caractérisée en ce que** les moyens anti-rotation prévus sur le tube extérieur (1) comprennent au moins un creux de réception d'au moins une traverse (47) ménagée en saillie sur le couvercle (41).

3. Balance à ressort selon l'une des revendications 1 à 2, **caractérisée en ce que** sur son côté doté de deux trous (3), le tube extérieur (1) présente un collet périphérique de fermeture en saillie (49) qui joue le rôle d'un renfort, ces trous (3) étant situés dans le collet (49).

4. Balance à ressort selon l'une des revendications 1 à 3, **caractérisée en ce que** le filet extérieur (10) présente sur la monture de ressort (9) de deux à huit et en particulier de trois à quatre tours de filet et **en ce que** le diamètre intérieur du premier tour du filet est plus petit que celui du dernier tour de filet.

5. Balance à ressort selon l'une des revendications 1 à 4, **caractérisée en ce qu'**une deuxième bride (50) est située sur la monture de ressort (9) entre la bride périphérique (33) et le filet extérieur (10).

6. Balance à ressort selon l'une des revendications 1 à 5, **caractérisée en ce que** le canal (40) prévu dans le support de monture (35) présente deux surfaces frontières latérales parallèles, mutuellement opposées, **en ce que** la surface frontière non latérale de ce canal (40) présente une forme concentrique par rapport à la forme de base cylindrique du support de monture (35) et **en ce que** ce canal (40) est situé au milieu de l'ouverture de la fente (37) en forme de U.

7. Balance à ressort selon l'une des revendications 1 à 6, **caractérisée en ce que** sur le couvercle (41) doté d'un ergot (42), les espaces creux (46) en retrait ont la forme d'une rainure qui est interrompue par deux traverses mutuellement opposées, l'une de ces traverses (47) étant en saillie et servant à empêcher la rotation.

8. Balance à ressort selon l'une des revendications 1 à 7, **caractérisée en ce que** le trou axial et central (48) qui traverse le couvercle (41) est polygonal et par exemple décagonal.

9. Balance à ressort selon l'une des revendications 1 à 8, **caractérisée en ce que** l'ergot (42) est formé sur le couvercle (41) et présente la forme d'un barreau, sa forme étant adaptée à celle de la paroi intérieure du tube extérieur (1).

10. Balance à ressort selon l'une des revendications 1 à 9, **caractérisée en ce que** l'extrémité de l'ergot (42) opposée au bonnet de fermeture (43) présente un épaississement (51) qui joue le rôle d'une butée pour le support de monture (35).

11. Balance à ressort selon l'une des revendications 1 à 10, **caractérisée en ce que** le ressort hélicoïdal (11) vissé de manière serrée dans le filet extérieur (10) de la monture de ressort (9) est fixé en outre par collage ou soudage sur le filet extérieur (10) ou par une bague torique sur la pièce intermédiaire (34, 56).

12. Balance à ressort selon l'une des revendications 1 à 11, **caractérisée en ce que** le couvercle (41) est relié par collage ou soudage au tube extérieur (1) de manière à ne permettre de séparer ces pièces (41), (1) qu'en les détruisant.
